# EUROPEAN PATENT SPECIFICATION

(11) **EP 3 183 305 B1**
(45) Date of publication and mention of the grant of the patent: **15.11.2023**
(21) Application number: 15833644.6
(22) Date of filing: 13.08.2015
(51) Int. Cl.: C09D 5/03, C09D 133/08, C09D 167/00, C08F 220/14, C08F 220/18

(54) **POWDER COATING COMPOSITION**
PULVERBESCHICHTUNGSZUSAMMENSETZUNG
COMPOSITION DE REVÊTEMENT EN POUDRE

(30) Priority: 20.08.2014 US 201462039614 P
(43) Date of publication of application: 28.06.2017
(73) Proprietor: SWIMC LLC, Cleveland, Ohio 44115 (US)
(72) Inventor: MARTINONI, Raffaele, 8633 Wolfhausen / ZH (CH); FRISCHKOPF, Rolf, 8620 Wetzikon / ZH (CH)
(74) Representative: Novagraaf Group
(86) International application number: PCT/US2015/044968
(87) International publication number: WO 2016/028584

(56) References cited:
- EP-A1- 2 085 441
- WO-A1-92/01748
- WO-A1-2014/065858
- JP-A- H10 168 345
- US-A1- 2013 224 413
- 'Springer Science & Business Media, Surface Coatings' RAW MATERIALS AND THEIR USAGE vol. I, 09 March 2013, XP009500385

## Description

The present invention provides a method for forming a coating on a substrate, the method comprising providing a powder coating composition comprising at least one specific polyester and a specific highly functional resin component; applying and melting the coating composition on at least one portion of the substrate; and solidifying the molten coating composition to form the coating.

### BACKGROUND

Metal food and beverage container interiors are typically coated with a thin polymer film to protect the interior metal surface from the can contents. For three-piece metal cans, the weld or side seam is further coated with a powder composition that provides corrosion protection to the side seam. Conventionally, compositions derived from bisphenol (i.e. bisphenol A (BPA), bisphenol F (BPF), aromatic glycidyl ether compounds, and the like) have been used for this purpose. Such coatings generally should exhibit sufficient adhesion and flexibility when used to protect the side seam or weld seam of a three-piece can, for example.

However, there is a perception that coatings that include BPA, BPF and the like, are less acceptable for use in the food and beverage industry, and accordingly, there is increased demand for bisphenol-free coatings. Unfortunately, such BPA-free coatings present significant challenges, especially when applied as weld or side seam coatings in three-piece cans. BPA-free powder coatings applied to weld or side seams of such substrates typically do not show sufficient adhesion to the substrate or flexibility to provide the required protection, and this is especially true for side seam coatings applied over BPA-free coatings, i.e. substrates coated with BPA-free compositions.

From the foregoing, it will be appreciated that what is needed in the art is a bisphenol-free coating composition that exhibits sufficient adhesion and flexibility to be used as a weld or side seam coating for a BPA-free three-piece food or beverage can.

### SUMMARY

The present description provides a method for forming a coating on at least one surface of a substrate. The method includes providing a coating composition having at least one polyester and an additional resin, wherein a cured coating made from the composition demonstrates optimal adhesion to the substrate.

In particular, the present invention provides a method for forming a coating on a substrate, the method comprising:
providing a powder coating composition comprising:
   at least one polyester having a weight-average molecular weight ranging from about 20,000 to about 50,000, and a melting temperature of at least 140°C and less than 160°C determined using differential scanning calorimetry; and
   about 1 to 5% of a highly functional resin component, wherein the resin component has a weight average molecular weight (Mw) of about 3,000 to about 10,000;
applying the coating composition to at least one portion of the substrate that forms a weld seam of a three-piece beverage can;
melting the coating composition on the at least one portion of the substrate; and solidifying the molten coating composition to form the coating adhered to the at least one portion of the substrate, wherein the coating demonstrates optimal adhesion to the at least one portion of the substrate,
wherein the highly functional resin component is a polymer comprising a monomeric unit derived from a glycidyl ester of an α,β-unsaturated acid or anhydride thereof.

In an embodiment, the coating composition includes about 50% to 99% by weight of the at least one polyester having a weight-average molecular weight ranging from about 20,000 to about 50,000, and 1% to 5% of the resin component, wherein the coating composition is in the form of a powder having particles with particle size such that at least about 99% by weight of the particles are capable of passing through a 100 µm sieve, with the composition configured to form a coating having an average coating thickness of less than about 70 µm, and wherein the coating composition demonstrates optimal adhesion when applied and cured to a metal substrate. Herein also described are coated articles that include a substrate with the coating composition described herein applied and cured thereon.

The above summary of the present invention is not intended to describe each disclosed embodiment or every implementation of the present invention. The description that follows more particularly exemplifies illustrative embodiments. In several places throughout the application, guidance is provided through lists of examples, which examples can be used in various combinations. In each instance, the recited list serves only as a representative group and should not be interpreted as an exclusive list.

The details of one or more embodiments of the invention are set forth in the accompanying drawings and the description below. Other features, objects, and advantages of the invention will be apparent from the description and drawings, and from the claims.

### SELECTED DEFINITIONS

Unless otherwise specified, the following terms as used herein have the meanings provided below.

The term "bisphenol-free," as used herein in the context of a monomer, polymer, or other component, refers to a component that does not include any "bisphenol backbone segments" (i.e. segments formed from reaction of a bisphenol and a halohydrin). Thus, for example, a polymer having backbone segments that are the reaction product of a bisphenol (e.g., bisphenol A, bisphenol F, bisphenol S, 4,4'-dihydroxy bisphenol, etc.) and a halohdyrin (e.g., epichlorohydrin) would not be considered bisphenol-free. However, a vinyl polymer formed from vinyl monomers and/or oligomers that include an epoxy moiety (e.g., glycidyl methacrylate) would be considered bisphenol-free because the vinyl polymer would be free of bisphenol backbone segments. However, as used herein, the term "bisphenol-free" is used for components that may contain epoxy backbone segments, i.e. the compounds are not epoxy-free. The terms "BPA-free" and "bisphenol-free" are used interchangeably herein.

The term "bisphenol" refers to a polyhydric polyphenol having two phenylene groups that each includes six-carbon rings and a hydroxyl group attached to a carbon atom of the ring, wherein the rings of the two phenylene groups do not share any atoms in common.

The term "component" refers to any compound that includes a particular feature or structure. Examples of components include compounds, monomers, oligomers, polymers, and organic groups contained there.

The term "double bond" is non-limiting and refers to any type of double bond between any suitable atoms (e.g., C, O, N, etc.).

The term "triple bond" is non-limiting and refers to any type of triple bond between any suitable atoms.

The term "substantially free" of a particular mobile compound means that the compositions described herein contain less than 1000 parts per million (ppm) of the recited mobile compound. The term "essentially free" of a particular mobile compound means that the compositions described herein contain less than 100 parts per million (ppm) of the recited mobile compound. The term "completely free" of a particular mobile compound means that the compositions described herein contain less than 5 parts per billion (ppb) of the recited mobile compound.

The term "thermoplastic" refers to a material that melts and changes shape when sufficiently heated and hardens when sufficiently cooled. Such materials are typically capable of undergoing repeated melting and hardening without exhibiting appreciable chemical change. In contrast, a "thermoset" refers to a material that is crosslinked and does not "melt."

Unless otherwise indicated, a reference to a "(meth)acrylate" compound (where "meth" is bracketed) is meant to include both acrylate and methacrylate compounds.

The term "polycarboxylic acid" includes both polycarboxylic acids and anhydrides thereof.

The term "optimal," as used herein, means best or most favorable with reference to one or more properties of a coating, relative to a conventional coating. Therefore, "optimal adhesion" means that the coating has the most favorable adhesion to the substrate relative to a conventional coating or other coating used for comparison, i.e. a level of adhesion that would be acceptable within the industry. As used herein, the term refers to the level of adhesion demonstrated by a coating such that the coating can resist mechanical stress and deformation during fabrication and use without losing adhesion and thereby provide full protection to the underlying substrate.

The term "on", when used in the context of a coating applied on a surface or substrate, includes both coatings applied directly or indirectly to the surface or substrate. Thus, for example, a coating applied to a primer layer overlying a substrate constitutes a coating applied on the substrate.

Unless otherwise indicated, the term "polymer" includes both homopolymers and copolymers (i.e., polymers of two or more different monomers).

The term "comprises" and variations thereof do not have a limiting meaning where these terms appear in the description and claims.

The terms "preferred" and "preferably" refer to embodiments of the invention that may afford certain benefits, under certain circumstances. However, other embodiments may also be preferred, under the same or other circumstances. Furthermore, the recitation of one or more preferred embodiments does not imply that other embodiments are not useful, and is not intended to exclude other embodiments from the scope of the invention.

As used herein, "a," "an," "the," "at least one," and "one or more" are used interchangeably. Thus, for example, a coating composition that comprises "an" additive can be interpreted to mean that the coating composition includes "one or more" additives.

### BRIEF DESCRIPTION OF THE DRAWINGS

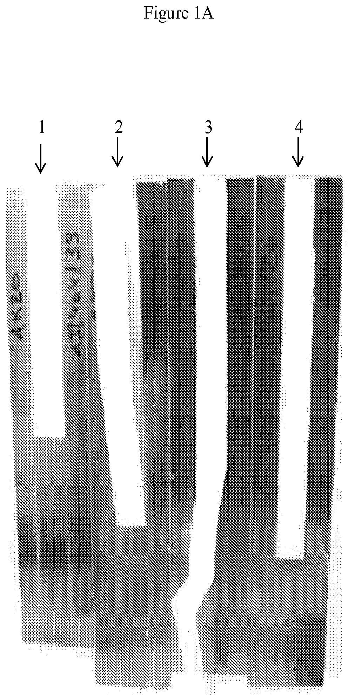

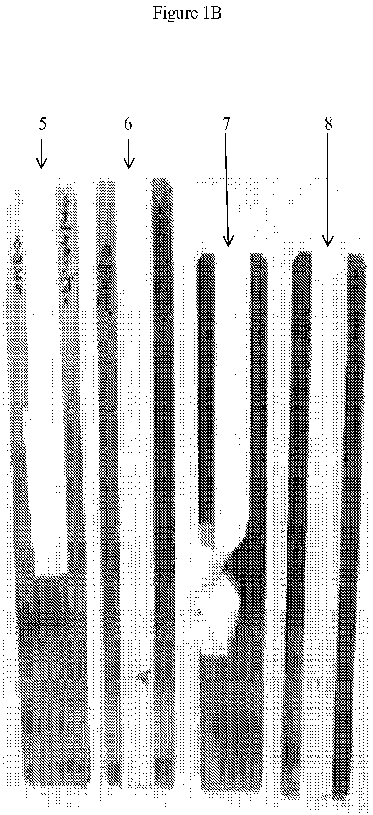

FIGS. 1A and 1B are photographs of the adhesion testing results for the inventive coatings compared to commercial and conventional coatings.

### DETAILED DESCRIPTION

Herein disclosed is a powder coating composition for forming coatings on substrates, such as metal substrates used to form three-piece food and beverage cans. Herein also disclosed are containers having weld seam or side seam coatings formed from the powder coating compositions described herein, and related methods of forming and applying the composition. As discussed below, the powder coating composition may be used to form a weld or side seam coating on a substrate that demonstrates optimal adhesion to the substrate. That is, the compositions described herein provide sufficient adhesion that the coating can undergo mechanical stress and deformation during fabrication and use without losing adhesion and thereby provide full protection to the underlying side seam and substrate.

The present invention provides a method for forming a coating on a substrate, as defined in the claims. The coating composition is applied to at least one portion of a substrate that forms a weld seam of a three-piece beverage can. A
three-piece can of this sort is made of metal, preferably tinplate, and includes a body attached to a lid piece and a bottom piece. The body is fabricated from a metal plate or sheet and shaped into a cylindrical geometry with the ends welded together at the sides to form a welded side seam or weld seam. Containers of this type are known in the art, and are described in Applicants' copending PCT Application, published as WO2014065858 (published May 1, 2014) .

To protect the side seam or weld seam, a powder coating composition is typically applied, then melted and solidified to form a coating along the weld seam. Conventionally, powder coating compositions applied along the weld seam have been made from bisphenol-based components. Such components are typically polymers having backbone segments that are the reaction products of a bisphenol (e.g., bisphenol A, bisphenol F, bisphenol S, 4,4'-dihydroxy bisphenol, etc.) and a halohdyrin (e.g., epichlorohydrin). These compounds are traditionally preferred because coatings made from these compounds provide good performance, including optimal adhesion, to the interior surface of the metal container, particularly during processing and manufacture. Without limiting to theory, it is believed that the presence of hydroxyl groups in the backbone of BPA-derived polymers contributes to the outstanding adhesion to various substrates. However, even with the inclusion of BPA, adhesive failure at the weld seam is possible for some powder compositions, particularly because of the mechanical stress and deformation that occurs during the flanging and seaming processes used to make a three-piece food or beverage can.

Non-BPA containing compositions are increasingly preferred in the industry, as there is a perception that some coatings containing bisphenol A (BPA), bisphenol F (BPF), and aromatic glycidyl ether compounds, are less acceptable for food and beverage containers. Accordingly, there is an increasing need for coating compositions that are bisphenol-free. However, BPA-free coatings present significant challenges when used to coat substrates, including the weld or side seam of three-piece food and beverage cans. These BPA-free coatings demonstrate poor adhesion to the substrate, resulting in insufficient protection for the side seam from corrosion during use. This is especially true when BPA-free powder compositions are used for side seam coatings applied to substrates coated with BPA-free compositions.

Surprisingly, the powder coating composition described herein is substantially or even essentially bisphenol-free, but demonstrates optimal adhesion to the substrate, including to a side seam or weld seam of a container, even when applied to substrates coated with BPA-free compositions. The adhesion is comparable or even superior to adhesion demonstrated by conventional coating compositions used to coat weld seams, whether on BPA-free coatings or coatings that contain BPA.

Accordingly, the present disclosure provides methods for forming a bisphenol-free coating on a substrate. The method includes providing a powder coating composition that includes at least one polyester. The at least one polyester described herein has a weight-average molecular weight of at least about 20,000, more preferably at least about 25,000, and even more preferably at least about 30,000. The weight-average molecular weight of the polyester is less than about 50,000, and preferably less than about 40,000. The polyester may also have a number-average molecular weight of at least about 8,000, more preferably at least about 10,000, and even more preferably at least about 12,000. The number-average molecular weight of the polyester may also be less than about 20,000, more preferably less than about 16,000, and even more preferably less than about 15,000.

The polyester is also preferably a semi-crystalline polyester having a glass transition temperature of at least about -20°C, more preferably at least about 10°C, and even more preferably at least about 15°. The glass transition temperature of the polyester may also be less than about 40°C, more preferably less than about 35°C, and even more preferably from about 25°C or less. The at least one polyester has a melting temperature of at least 140°C.

The melting temperature of the polyester is less than 160°C. As used herein, the "glass transition temperature" and the "melting temperature" may each be determined using differential scanning calorimetry (DSC).

The at least one polyester resin described herein may be included in a blend including two or more polyesters. In an embodiment, the other polyesters present in the blend may have any suitable molecular weight, any suitable melt viscosity and any suitable Tg. For a detailed description of one example of a blend used in a powder coating composition, see Applicants' copending PCT Application, published as WO2014065858 (published May 1, 2014). The polyester described herein may be prepared, for example, by condensing a dicarboxylic acid with a diol (e.g., an aliphatic diol). In some embodiments, the dicarboxylic acid may include terephthalic acid, isophthalic acid, a naphthalene dicarboxylic acid, or mixtures thereof. It is also understood that an esterifiable derivative of a dicarboxylic acid, such as a dimethyl ester or anhydride of a dicarboxylic acid, can be used to prepare the polyesters.

In particular, exemplary dicarboxylic acids used to prepare the polyester may include aliphatic and aromatic dicarboxylic acids, such as, but not limited to, phthalic acid, isophthalic acid, terephthalic acid, 5-tert-butyl isophthalic acid, adipic acid, malonic acid, 2,6-naphthalenedicarboxylic acid, 1,5-naphthalenedicarboxylic acid, hexahydroterephthalic acid, 1,4-cyclohexanedicarboxylic acid, sebacic acid, azeleic acid, succinic acid, glutaric acid, fumaric acid, and mixtures and esterifiable derivatives thereof. Substituted aliphatic and aromatic dicarboxylic acids, such as halogen or alkyl-substituted dicarboxylic acids, may also be useful.

Non-limiting examples of diols that may be useful in preparing the polyester may include ethylene glycol, diethylene glycol, triethylene glycol, propylene glycol, dipropylene glycol, hexylene glycol, butylene glycol, pentylene glycol, neopentyl glycol, trimethylpropane diol, 1,4-cyclohexanedimethanol, 1,10-decanediol, 2,2-dimethyl-1,3-propanediol, 2,2,4,4-tetramethyl-1,3-cyclobutandiol, a polyethylene or polypropylene glycol having a molecular weight of about 500 or less, and mixtures thereof. A small amount of a triol or polyol, such as, 0 to 3 mole% of diol, can be used to provide partially branched polyesters, as opposed to linear polyesters.

The diol and the dicarboxylic acid, in correct proportions, may be reacted under standard esterification procedures to provide one or more polyesters having the desired molecular weights, glass transition temperatures, molecular weight distributions, branching (if any), crystallinities, and functionality for use in a present powder coating composition. Useful polymers and copolymers for polyester include polyethylene terephthalates (PET), polyethylene terephthalates derived from both terephthalic acid and isophthalic acid (PET-I), polybutylene terephthalates (PBT), polyethylene naphthalates (PEN), and polybutylene naphthalates (PBN), polytrimethylene terephthalate (PTT), polytrimethylene naphthanate (PTN), and copolymers and mixtures thereof. Such polyesters may include any combination of one or more additional co-monomers.

In addition, suitable polymers and copolymers for the polyester are commercially available under the tradename GRILTEX, from EMS-Griltech, Switzerland. Examples of specific polyesters include GRILTEX D2343, available as a copolymer from EMS-Griltech, Switzerland, GRILTEX D2360, available as a copolymer from EMS-Griltech, Switzerland, and the like.

The powder coating composition described herein preferably has a fine particle size distribution such that at least about 95% by weight of the particles are capable of passing through a 100-micrometer sieve. More preferably, at least about 99% by weight of the particles are capable of passing through a 100-micrometer sieve. The particle size distributions referred to herein are measured pursuant to ASTM E1 1-09e1. An example of a suitable sieve for determining particle size distributions is commercially available under the tradename HAVER TEST SIEVE from Haver & Boecker OHG, Germany.

In an embodiment, the powder coating composition described herein is preferably substantially bisphenol-free, i.e. substantially free of bisphenol A (BPA) and bisphenol A diglycidyl ether (BADGE) compounds (mobile or bound), and more preferably essentially free of these compounds, and most preferably completely free of these compounds. In addition, in these embodiments, the preferred powder coating composition is also substantially free, more preferably essentially free, and most preferably completely free of: bisphenol S, bisphenol F, bisphenol F diglycidyl ether, and bisphenol S diglycidyl ether compounds.

Preferred epoxy and phenoxy resins include BPA-free and BADGE-free epoxy and phenoxy resins based on the aromatic diepoxides (e.g., diglycidyl ethers) described in U.S. Application Serial Numbers 13/570,632, 13/570,743, and 61/681,394, with the diepoxide of 4,4'-methylenebis(2,6-dimethylphenol) being one such example of an aromatic diepoxide. An epoxy resin can be used in its commercially available form, or can be prepared by advancing a low molecular weight epoxy compound by standard methods well known to those skilled in the art. Exemplary epoxy resins include, but are not limited to those commercially available under the tradename EPON from Shell Chemical Co., Houston, Texas; those commercially available under the tradename ARALDITE from Huntsman Advanced Materials GmbH, Switzerland; and those commercially available from Kukdo Chemical Co., Ltd., South Korea. The epoxycontaining compounds and/or phenoxy-containing compounds also preferably have a fine particle size distribution as discussed above for the blend of one or more polyesters.

The powder coating composition used in the present invention includes at least one additional resin component. The resin component is a highly functional low molecular weight polymer that includes at least one monomer unit derived from a glycidyl ester of an α,β-unsaturated acid or anhydride thereof. In an embodiment, the resin component is a copolymer including a first monomeric unit derived from a glycidyl ester of an α,β-unsaturated acid or anhydride thereof and a second monomeric unit derived from an alkyl (meth)acrylate having the following structure: 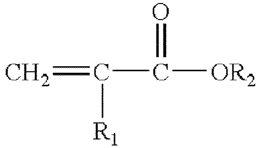 wherein R1 is hydrogen or methyl, and R2 is an alkyl group having 1 to 16 carbon atoms (C1 to C16). In an embodiment, the component includes at least about 20 to 90% by weight of the polymer derived from the monomeric unit described herein. The component is included in the powder coating composition in an amount of 1% to 5% by weight, based on the total weight of the composition. As indicated above, the highly functional low molecular weight resin component is a polymer including a monomer unit derived from a glycidyl ester of an α,β-unsaturated acid or anhydride thereof. Examples of such carboxylic acids include, without limitation, acrylic acid, methacrylic acid, ethacrylic acid, α-chloroacrylic acid, α-cyanoacrylic acid, β-methylacrylic acid (crotonic acid), α-phenylacrylic acid, β-acryloxypropionic acid, sorbic acid, α-chlorosorbic acid, angelic acid, cinnamic acid, p-chlorocinnamic acid, β-stearylacrylic acid, itaconic acid, citraconic acid, mesaconic acid, glutaconic acid, aconitic acid, maleic acid, fumaric acid, tricarboxyethylene, maleic anhydride, and mixtures thereof. Specific examples of monomers containing a glycidyl group are glycidyl (meth)acrylate (i.e., glycidyl methacrylate and glycidyl acrylate), mono- and di-glycidyl itaconate, mono- and diglycidyl maleate, and mono- and di-glycidyl formate.

A preferred epoxy functionalized monomer is glycidyl (meth)acrylate, which has the following structure: 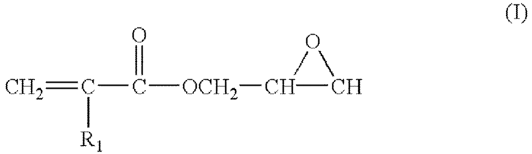 wherein R₁ is hydrogen or methyl. The resulting epoxy functionalized component is a homopolymer made up of glycidyl (meth)acrylate monomeric units that may be depicted with the following structure:

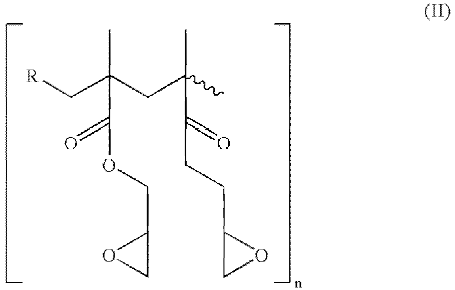

In another embodiment, the epoxy functionalized component may be a copolymer with a general formula [A-B]ₙ, where A is a monomeric unit derived from the epoxy functionalized monomer and B is a monomeric unit derived from an alkyl (meth)acrylate having the structure: 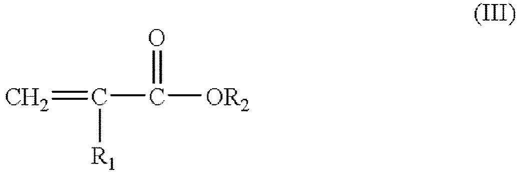 wherein R₁ is hydrogen or methyl, and R₂ is an alkyl group containing one to sixteen carbon atoms.

The R₂ group can be substituted with one or more, and typically one to three, moieties such as hydroxy, halo, amino, phenyl, and alkoxy, for example. The alkyl (meth)acrylates used in the copolymer therefore encompass hydroxy alkyl (meth)acrylates and aminoalkyl (meth)acrylates. The alkyl (meth)acrylate can be an ester of acrylic or methacrylic acid. Examples of suitable (meth)acrylic acid esters are C₁₋₂₄ alkyl esters or cycloalkyl esters of acrylic or ethacrylic acids, such as methyl acrylate, ethyl acrylate, propyl acrylate, isopropyl acrylate, n-butyl acrylate, isobutyl acrylate, t-butyl acrylate, hexyl acrylate, 2-ethylhexyl acrylate, n-octyl acrylate, decyl acrylate, stearyl acrylate, lauryl acrylate, cyclohexyl acrylate, methyl methacrylate, ethyl methacrylate, n-propyl methacrylate, isopropyl methacrylate, n-butyl methacrylate, isobutyl methacrylate, t-butyl methacrylate, hexyl methacrylate, 2-ethylhexyl methacrylate, octyl methacrylate, decyl methacrylate, lauryl methacrylate, stearyl methacrylate, cyclohexyl methacrylate, etc.; C₂₋₁₈ alkoxyalkyl esters of acrylic or methacrylic acids, such as methoxybutyl acrylate, methoxybutyl methacrylate, methoxyethyl acrylate, methoxyethyl methacrylate, ethoxybutyl acrylate, ethoxybutyl methacrylate, etc.; and the like.

In an aspect of the invention, R₁ is methyl and R₂ is an alkyl group having two to eight carbon atoms. In another aspect, R₁ can be methyl and R₂ can be an alkyl group having two to four carbon atoms. Examples of the alkyl (meth)acrylate include, but are not limited to, methyl, ethyl, propyl, isopropyl, butyl, isobutyl, pentyl, isoamyl, hexyl, 2-aminoethyl, 2-hydroxyethyl, 2-ethylhexyl, cyclohexyl, decyl, isodecyl, benzyl, 2-hydroxypropyl, lauryl, isobornyl, octyl, and nonyl-(meth)acrylates.

In a preferred embodiment, the additional resin component included in the powder coating composition described herein is a polymer derived from glycidyl methacrylate (GMA), or a copolymer of GMA with ethyl methacrylate (EMA) or other (meth)acrylate monomers, or mixtures and combinations thereof. Exemplary resin components include GMA-containing polymers and/or copolymers including but not limited to those commercially available from Estron Chemical (Calvert City, Kentucky).

The additional resin component included in the powder coating composition described herein has a weight average molecular weight (M_{w}) of about 3,000 to 10,000, and preferably 4,000 to 8,000.

The additional resin component may be made by a variety of methods known to those of skill in the art, including methods described in U.S. Patent No. 6,916,874 (issued July 12, 2005).

In some embodiments, the powder coating compositions described herein may include one or more optional additives. Examples of suitable additives for the powder coating composition include colorants, inorganic fillers, surfactants, flow control agents, heat stabilizers, anti-corrosion agents, antioxidants, adhesion promoters, light stabilizers, and combinations thereof. For example, the powder coating composition may include a colorant, such as a pigment or dye. Examples of suitable colorants for use in the powder coating composition include titanium dioxide, barium sulfate, carbon black, and iron oxide, and may also include organic dyes and pigments. The colorant may constitute, e.g., from about 1% to about 50% by weight of the powder coating composition, more preferably from about 10% to about 30% by weight, and even more preferably from about 15% to about 20% by weight. The use of a higher colorant concentration may be advantageous to achieve good coverage with thinner coatings (e.g., coating 34).

Exemplary inorganic fillers used in the powder coating composition described herein include, but are not limited to, clay, mica, aluminum silicate, fumed silica, magnesium oxide, zinc oxide, barium oxide, calcium sulfate, calcium oxide, aluminum oxide, magnesium aluminum oxide, zinc aluminum oxide, magnesium titanium oxide, iron titanium oxide, calcium titanium oxide, and mixtures thereof. If present, the inorganic fillers may constitute, e.g., from about 0.1% to about 20% by weight of the powder coating composition, more preferably from about 1% to about 15% by weight, and even more preferably from about 2% to about 10% by weight.

An exemplary flow control agent for use in the powder coating composition is a polyacrylate commercially available under the tradename PERENOL from Henkel Corporation, Rocky Hill, Connecticut. Additionally useful polyacrylate flow control agents are commercially available under the tradename ACRYLON MFP from Protex France, and those commercially available from BYK-Chemie GmbH, Germany. Numerous other compounds and other acrylic resins known to persons skilled in the art also can be used as a flow control agent. The flow control agents may constitute, e.g., from about 0.1% to about 5% by weight of the powder coating composition, and more preferably from about 0.2% to about 1% by weight. The flow control agent assists in achieving a uniform thin film for the applied onto the inner surface of a container, and may further assist in reducing lumping and dust issues that may otherwise occur with fine powder particles.

Examples of suitable surfactants for use in the powder coating composition include wetting agents, emulsifying agents, suspending agents, dispersing agents, and combinations thereof. Examples of suitable surfactants for use in the coating composition include non-ionic and anionic surfactants (e.g., waxes). The surfactants may constitute from about 0.1% to about 10% by weight of the powder coating composition, and more preferably from about 0.2% to about 5% by weight.

The powder coating composition described herein can be prepared by methods well known in the art, such as by individually heating the one or more polyesters, and the at least one resin additive, along with fillers, colorants, flow control agents, and the like, to a sufficient temperature to melt each ingredient, and admixing the molten ingredients, such as in a single screw or double screw extruder, to provide a substantially homogenous blend.

Without limiting to theory, it is believed that the additional resin component could undergo crosslinking at the temperature at which the composition is typically extruded. Accordingly, in an embodiment, to avoid crosslinking of the resin additive, the extruder is maintained at a temperature of about125°C to 250°C, preferably about 150°C to 220°C.

The resulting blend of polyester and resin component may then be compounded into pellets, crystallized, and milled (e.g., cryogenic milling) to attain the desired fine particle sizes. The relatively low molecular weight of the polyester(s) increases the ease of milling to the fine particle sizes. One or more of the optional additives may then be mixed with the polyester particles, and the resulting composition may be sieved and packaged for subsequent use. Alternatively, one or more of the optional additives may be included in a melt blend including the one or more polyesters.

During use, the powder coating composition may be applied to a metal substrate, such as, without limitation, at a side seam or weld seam of a three-piece can. In the present invention, the powder coating composition is used as a weld seam coating. However, the powder coating composition may also be used for a variety of other coating applications. For example, in some embodiments, the powder coating composition may be applied to assist in forming the lid seal and/or bottom seal of a three-piece container as described in Applicant's copending PCT Application, published as WO2014065858 (published May 1, 2014).

The final powder may then be applied to an article by various means including the use of fluid beds and spray applicators. Most commonly, an electrostatic spraying process is used, wherein the particles are electrostatically charged and sprayed onto an article that has been grounded so that the powder particles are attracted to and cling to the article. Typically, a corona charging process is used for electrostatic application, although tribo charging or a combination of corona and tribo charging may be used. After coating, the article is heated. This heating step causes the powder particles to melt and flow together to coat the article. Optionally, continued or additional heating may be used to cure the coating. Other alternatives such as UV curing of the coating may be used.

The coating is optionally cured, and such curing may occur via continued heating, subsequent heating, or residual heat in the substrate. In another embodiment of the invention, if a radiation curable powder coating base is selected, the powder can be melted by a relatively short or low temperature heating cycle, and then may be exposed to radiation to initiate the curing process. One example of this embodiment is a UV-curable powder. Other examples of radiation curing include using UV-vis, visible light, near-IR, IR and e-beam. Preferably, the coating composition described herein is cured by heating to a molten stage followed by solidifying the coating by active or passive cooling leading to the formation of a hardened or cured coating.

The powder coating composition is preferably capable of forming coatings having coating thicknesses of about 70 micrometer or less. During fabrication of a coated article and during use, the coating protects the underlying metal substrate, including the weld seam, from corrosion or other environmental conditions, thereby preserving the integrity of the container.

### EXAMPLES

The invention is illustrated by the following examples. It is to be understood that the particular examples, materials, amounts, and procedures are to be interpreted broadly in accordance with the scope of the invention as set forth herein. Unless otherwise indicated, all parts and percentages are by weight and all molecular weights are weight average molecular weight. Unless otherwise specified, all chemicals used are commercially available from, for example, Sigma-Aldrich, St. Louis, Missouri.

### TEST METHODS

Unless indicated otherwise, the following test methods were utilized in the Examples that follow.

### Adhesion Test

Adhesion testing is performed to assess whether the coating adheres to the coated substrate. The adhesion test is performed as follows. Powder coatings are sprayed and cured on to metal test panels. For each test panel, a strip is made by cutting through the coating. One end of the strip is loosened to form a tab. The tab is then pulled to determine if the coating adheres to or peels off the substrate surface.

### Example 1: Adhesion Testing of Powder Coatings

Powder coating compositions were prepared as shown in Table 1. Each composition was sprayed onto a metal panel at a coating thickness of about 50 to 70 microns and then cured by heating in an oven followed by passive cooling to provide a coated substrate. The coating was then tested for adhesion by the methods described above. Results of the adhesion test are shown in Figures 1A and 1B. Figure 1A shows adhesion test results for different compositions applied to a commercially available coated substrate, such as BPA-Ni (BPA-Nonintent, i.e. a composition where BPA is not intentionally added or included). Figure 1B shows substrates coated with BPA-Ni and standard BPA-containing compositions prepared with the additional resin component and without this component. As can be seen from the figures and the adhesion results shown in Table 1, the substrates with BPA-Ni coatings and even the standard BPA-containing compositions show poor adhesion to the substrate, but the coating compositions that include the additional resin component show superior adhesion to the substrate, whether for substrates with conventional BPA-containing coatings or BPA-Ni coatings.

**Table 1. Powder Coating Compositions**

| Substrate (with coating) | Polyester | Additional Resin Component | Adhesion |
|---|---|---|---|
| 1 (BPA-Ni) | + | -- | Poor |
| 2 (BPA-Ni) | + | -- | Poor |
| 3 (BPA-Ni) | + | -- | Poor |
| 4 (BPA-Ni) | + | -- | Poor |
| 5 (BPA-Ni) | + | -- | Poor |
| 6 (BPA-Ni) | + | + | Good |
| 7 (Standard) | + | - | Poor |
| 8 (Standard) | + | + | Good |

## Claims

1. A method for forming a coating on a substrate, the method comprising:
providing a powder coating composition comprising:
at least one polyester having a weight-average molecular weight ranging from about 20,000 to about 50,000, and a melting temperature of at least 140°C and less than 160°C determined using differential scanning calorimetry; and
about 1 to 5% of a highly functional resin component, wherein the resin component has a weight average molecular weight (M_{w}) of about 3,000 to about 10,000;
applying the coating composition to at least one portion of the substrate that forms a weld seam of a three-piece beverage can;
melting the coating composition on the at least one portion of the substrate; and
solidifying the molten coating composition to form the coating adhered to the at least one portion of the substrate, wherein the coating demonstrates optimal adhesion to the at least one portion of the substrate,
wherein the highly functional resin component is a polymer comprising a monomeric unit derived from a glycidyl ester of an α,β-unsaturated acid or anhydride thereof.

2. The method of claim 1, wherein the highly functional resin component is a polymer comprising a monomeric unit derived from a glycidyl ester of (meth)acrylic acid.

3. The method of claim 1, wherein the highly functional resin component is a polymer derived from glycidyl methacrylate.

4. The method of claim 1, wherein the resin component is a copolymer including a first monomeric unit derived from a glycidyl ester of an α,β-unsaturated acid or anhydride thereof and a second monomeric unit derived from a monomeric unit having the structure: 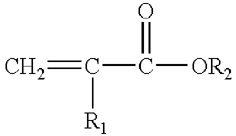 wherein R₁ is -H or -CH₃, and R₂ is a C1-C16 alkyl group.

5. The method of claim 1, wherein the resin component has a weight average molecular weight (M_{w}) of about 4000 to 8000.

6. The method of claim 1, wherein the step of providing a coating composition further comprises:
compounding together the at least one polyester resin and the resin component to form a mixture; and
milling the mixture to obtain a powder composition with particle size such that 99% of particles in the powder composition can pass through a 100 µm sieve.

7. The method of claim 6, wherein the mixture formed by compounding together the at least one polyester resin and the resin component further comprises one or more colorants, one or more fillers and one or more flow control agents.

8. The method of claim 6, wherein the step of compounding further comprises using an extruder cooled to a temperature of about 150 °C to 220 °C.

9. The method of claim 1, wherein applying the coating composition in powder form to the substrate or portion thereof comprises applying the coating composition to a side seam of a container.

10. The method of claim 1, wherein providing a substrate comprises forming the substrate into a side seam of a container.

11. The method of claim 1, wherein the formed coating is substantially free of pores.

## Patentansprüche

1. Verfahren zum Ausbilden einer Beschichtung auf einem Substrat, das Verfahren umfassend:
Bereitstellen einer Pulverbeschichtungszusammensetzung, umfassend:
mindestens einen Polyester, der ein Massenmittel, das von etwa 20.000 bis etwa 50.000 reicht, und eine Schmelztemperatur von mindestens 140 °C und weniger als 160 °C aufweist, die unter Verwendung von Differentialscanningkalorimetrie bestimmt wird; und
zu etwa 1 bis 5 % eine hochfunktionellen Harzkomponente, wobei die Harzkomponente ein Massenmittel (M_{w}) von etwa 3.000 bis etwa 10.000 aufweist;
Aufbringen der Beschichtungszusammensetzung auf mindestens einen Abschnitt des Substrats, der eine Schweißnaht einer dreiteiligen Getränkedose ausbildet;
Schmelzen der Beschichtungszusammensetzung auf dem mindestens einen Abschnitt des Substrats; und
Verfestigen der geschmolzenen Beschichtungszusammensetzung, um die Beschichtung auszubilden, die an dem mindestens einen Abschnitt des Substrats haftet, wobei die Beschichtung eine optimale Haftung an dem mindestens einen Abschnitt des Substrats zeigt,
wobei die hochfunktionelle Harzkomponente ein Polymer ist, umfassend eine Monomereinheit, die von einem Glycidylester einer α,β-ungesättigten Säure oder eines Anhydrids davon abgeleitet ist.

2. Verfahren nach Anspruch 1, wobei die hochfunktionelle Harzkomponente ein Polymer ist, umfassend eine Monomereinheit, die von einem Glycidylester von (Meth)acrylsäure abgeleitet ist.

3. Verfahren nach Anspruch 1, wobei die hochfunktionelle Harzkomponente ein Polymer ist, das von Glycidylmethacrylat abgeleitet ist.

4. Verfahren nach Anspruch 1, wobei die Harzkomponente ein Copolymer ist, das eine erste Monomereinheit, die von einem Glycidylester einer α,β-ungesättigten Säure oder eines Anhydrids davon abgeleitet ist, und eine zweite Monomereinheit einschließt, die von einer Monomereinheit abgeleitet ist, die die folgende Struktur aufweist: 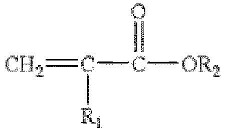 wobei R₁ -H oder-CHs ist, und R₂ eine C1-C16-Alkylgruppe ist.

5. Verfahren nach Anspruch 1, wobei die Harzkomponente ein Massenmittel (M_{w}) von etwa 4000 bis 8000 aufweist.

6. Verfahren nach Anspruch 1, wobei der Schritt des Bereitstellens einer Beschichtungszusammensetzung ferner umfasst:
Compoundieren des mindestens einen Polyesterharzes und der Harzkomponente, um eine Mischung auszubilden; und
Mahlen der Mischung, um eine Pulverzusammensetzung mit Partikelgröße zu erhalten, derart, dass 99 % der Partikel in der Pulverzusammensetzung ein 100-µm-Sieb passieren können.

7. Verfahren nach Anspruch 6, wobei die Mischung, die durch Compoundieren des mindestens einen Polyesterharzes und der Harzkomponente ausgebildet wird, ferner einen oder mehrere Farbstoffe, einen oder mehrere Füllstoffe und ein oder mehrere Verlaufmittel umfasst.

8. Verfahren nach Anspruch 6, wobei der Schritt der Compoundierens ferner ein Verwenden eines Extruders umfasst, der auf eine Temperatur von etwa 150 °C bis 220 °C abgekühlt wird.

9. Verfahren nach Anspruch 1, wobei das Aufbringen der Beschichtungszusammensetzung in Pulverform auf das Substrat oder den Abschnitt davon das Aufbringen der Beschichtungszusammensetzung auf eine Seitennaht eines Behälters umfasst.

10. Verfahren nach Anspruch 1, wobei das Bereitstellen eines Substrats das Ausbilden des Substrats in eine Seitennaht eines Behälters umfasst.

11. Verfahren nach Anspruch 1, wobei die ausgebildete Beschichtung im Wesentlichen frei von Poren ist.

## Revendications

1. Procédé permettant de former un revêtement sur un substrat, le procédé comprenant :
la fourniture d'une composition de revêtement en poudre comprenant :
au moins un polyester ayant une masse moléculaire moyenne en poids allant d'environ 20 000 à environ 50 000, et une température de fusion d'au moins 140 °C et inférieure à 160 °C déterminée à l'aide d'une calorimétrie différentielle à balayage ; et
environ 1 à 5 % d'un composant de résine hautement fonctionnel, le composant de résine ayant une masse moléculaire moyenne en poids (M_{w}) d'environ 3000 à environ 10 000 ;
l'application de la composition de revêtement sur au moins une partie du substrat qui forme un joint de soudure d'une canette de boisson en trois pièces ;
la fusion de la composition de revêtement sur l'au moins une partie du substrat ; et
la solidification de la composition de revêtement fondue pour former le revêtement fixé par adhérence à l'au moins une partie du substrat, le revêtement présentant une adhérence optimale à l'au moins une partie du substrat,
dans lequel le composant de résine hautement fonctionnel est un polymère comprenant un motif monomère dérivé d'un ester glycidylique d'un acide α,β-insaturé ou anhydride de celui-ci.

2. Procédé selon la revendication 1, dans lequel le composant de résine hautement fonctionnel est un polymère comprenant un motif monomère dérivé d'un ester glycidylique d'acide (méth)acrylique.

3. Procédé selon la revendication 1, dans lequel le composant de résine hautement fonctionnel est un polymère dérivé de méthacrylate de glycidyle.

4. Procédé selon la revendication 1, dans lequel le composant de résine est un copolymère comportant un premier motif monomère dérivé d'un ester glycidylique d'un acide α,β-insaturé ou anhydride de celui-ci et un second motif monomère dérivé d'un motif monomère ayant la structure : 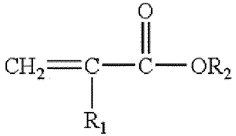 R₁ étant -H ou -CH₃, et R₂ étant un groupe alkyle en C1 à C16.

5. Procédé selon la revendication 1, dans lequel le composant de résine a une masse moléculaire moyenne en poids (M_{w}) d'environ 4000 à 8000.

6. Procédé selon la revendication 1, dans lequel l'étape de fourniture d'une composition de revêtement comprend en outre :
le mélange conjoint de l'au moins une résine de polyester et du composant de résine pour former un mélange ; et
le broyage du mélange pour obtenir une composition de poudre avec une taille de particules telle que 99 % des particules dans la composition de poudre peuvent passer à travers un tamis de 100 µm.

7. Procédé selon la revendication 6, dans lequel le mélange formé par mélange conjoint de l'au moins une résine de polyester et du composant de résine comprend en outre un ou plusieurs colorants, une ou plusieurs charges et un ou plusieurs agents de régulation d'écoulement.

8. Procédé selon la revendication 6, dans lequel l'étape de mélange comprend en outre l'utilisation d'une extrudeuse refroidie à une température d'environ 150 °C à 220 °C.

9. Procédé selon la revendication 1, dans lequel l'application de la composition de revêtement sous forme de poudre au substrat ou à une partie de celui-ci comprend l'application de la composition de revêtement sur une jonction latérale d'un récipient.

10. Procédé selon la revendication 1, dans lequel la fourniture d'un substrat comprend la formation du substrat en une jonction latérale d'un récipient.

11. Procédé selon la revendication 1, dans lequel le revêtement formé est sensiblement dépourvu de pores.
